(19) Europäisches Patentamt
European Patent Office
Office européen des brevets

(11) EP 2 247 446 B1

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(21) Anmeldenummer: **09713202.1**

(22) Anmeldetag: **11.02.2009**

(51) Int Cl.:
***B32B 27/08*** *(2006.01)* ***C08J 5/18*** *(2006.01)*

(86) Internationale Anmeldenummer:
**PCT/EP2009/000935**

(87) Internationale Veröffentlichungsnummer:
**WO 2009/103446 (27.08.2009 Gazette 2009/35)**

# (54) ASYMMETRISCHER MEHRSCHICHTVERBUND

ASYMMETRICAL LAMINATE

COMPOSITE MULTICOUCHE ASYMÉTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.02.2008 DE 102008010752**

(43) Veröffentlichungstag der Anmeldung:
**10.11.2010 Patentblatt 2010/45**

(73) Patentinhaber: **Bayer MaterialScience AG**
**51368 Leverkusen (DE)**

(72) Erfinder:
- **HOBEIKA, Sven**
  **42699 Solingen (DE)**
- **CAPELLEN, Peter**
  **47803 Krefeld (DE)**
- **KAMMERER, Roderich**
  **53604 Bad Honnef (DE)**
- **BRAMBRINK, Roland**
  **40880 Ratingen (DE)**

(56) Entgegenhaltungen:
**EP-A- 1 577 084** **EP-A- 1 743 756**
**WO-A-2005/068195** **WO-A-2008/000528**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 247 446 B1

## Beschreibung

Die vorliegende Erfindung betrifft bewitterungsstabile Verscheibungen und Außenteile mit exzellenter Witterungsstabilität und sehr guter Tieftemperaturzähigkeit und deren Herstellung, insbesondere einen Mehrschichtverbund umfassend in dieser Reihenfolge Schicht A), Schicht B) und Schicht C), wobei

Schicht A) ein Kratzfestlack ist;
Schicht B) ein Thermoplast ist;
Schicht C) ein Kratzfestlack ist;

dadurch gekennzeichnet, dass Schicht A) ungleich Schicht C) ist, und wobei ein Mehrschichtverbund mit auf beiden Seiten der Schicht B) angeordneten Schichten A) eine niedrigere kritische Auftreffgeschwindigkeit für den zäh/spröd Übergang bei -30°C in Anlehnung an DIN EN ISO 6603-1 aufweist als ein Mehrschichtverbund mit auf beiden Seiten der Schicht B) angeordneten Schichten C).

Die vorliegende Erfindung betrifft weiterhin einen Multilagenaufbau mit zwei unterschiedlichen Seiten, einer Außen- und einer Innenseite, im Folgenden auch als asymmetrischer Aufbau bezeichnet. Dieser asymmetrische Multilagenaufbau besteht aus folgender Schichtabfolge, von der Außenseite zur Innenseite gehend: abriebsbeständige, witterungsstabile Beschichtung / thermoplastisches Substrat / abriebsbeständige Beschichtung und ist dadurch gekennzeichnet, dass die Außenseite über exzellente Bewitterungs- und Kratzfesteigenschaften verfügt, während der Gesamtaufbau eine hohe Tieftemperaturzähigkeit aufweist.

Des Weiteren umfasst die vorliegende Erfindung ein Verfahren zur Herstellung dieses erfindungsgemäßen Multilagenaufbaus, sowie die Verwendung als Verscheibungsmaterial, wie zum Beispiel Automobilverscheibung oder Architekturverscheibung, sowie Windshields, d.h. Auto- oder Motorradscheibe, Säulen- und Karosserieabdeckungen und Blenden, wobei vorwiegend die Außenseite des asymmetrischen Aufbaus dem Außenbewitterungseinfluss ausgesetzt ist.

Thermoplastische Substrate, wie beispielsweise Polycarbonate, sind im Allgemeinen durch viele vorteilhafte Eigenschaften charakterisiert, die Klarheit, hohe Duktilität, hohe Wärmeverformbeständigkeit, ebenso wie Formstabilität einschließen. Viele dieser Materialien sind transparent und werden in einigen Fällen als Ersatz für Glas in kommerziellen Anwendungen eingesetzt.

Während thermoplastische Harze die oben beschriebenen vorteilhaften Eigenschaften aufweisen, zeigen sie für einige Anwendungen eine zu geringe Abriebs- und chemische Lösungsmittelbeständigkeit. Darüber hinaus sind sie wie viele andere organische polymere Materialien auch empfindlich gegen Abbau durch ultraviolettes Licht. Dies führt zu Vergilben und Erosion der Substratoberfläche.

Aus diesen Gründen werden thermoplastische Substrate wie beispielsweise Polycarbonatteile mit einem Schutzüberzug versehen. Dabei sind für den Außeneinsatz gerade solche Schutzsysteme besonders geeignet, die sowohl einen mechanischen Schutz gegen Abrieb und Verkratzung als auch einen exzellenten Schutz gegen Bewitterungseinflüsse, d.h. Beregnung, Temperatur und insbesondere ultraviolette Strahlung (UV) bilden.

Die hierfür geeigneten Beschichtungssysteme, die beispielsweise für Polycarbonatplatten im Baubereich, für Scheinwerferabdeckscheiben aus Polycarbonat oder auch im Bereich der Polycarbonat-Automobilverscheibung verwendet werden, lassen sich grob in drei Kategorien einteilen:

(a) Thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können. Diese sind u. a. in US 4,278,804, US 4,373,061,US 4,410,594, US 5,041,313 und EP-A-1 087 001 beschrieben. Beispielhaft sind hier die kommerziell erhältlichen Systeme der Momentive Performance Materials Inc. Wilton, CT USA wie PHC 587; PHC 587B, PHC 587C; SHP 401 (Primer) / AS 4000 (Topcoat) oder auch SHP 401 (Primer) / AS 4002 (Topcoat) erwähnt sowie - KASI Flex® oder Sun Flex®, beide von KRD Coatings, Geesthacht, Deutschland, oder Silvue® MP 100, SDC Coatings, Deutschland, oder Sicralan® MRL von GFO, Schwäbisch Gmünd, Deutschland.

Als "lediglich haftvermittelnde Primerschicht" werden solche Primerschichten bezeichnet, die aus einem haftvermittelndem Polymer und optional einem oder mehreren UV-Absorbern bestehen, die aber aufgrund des vollständigen Fehlens von UV-Absorbern oder aufgrund ihrer geringen Konzentration an UV-Absorber in Kombination mit der zu geringen Schichtdicke nicht die angestrebten Bewitterungsstabilitäten bewirken können. Bei den konventionellen Dickprimersystemen (siehe (b)) liegen diese zu geringen Schichtdicken im Bereich von etwa 0,3 -1,5 $\mu$m.

Diese sind jedoch für einige Anwendungsfälle noch nicht in ausreichendem Maße witterungsstabil. Um eine höhere Lebensdauer der Bauteile zu erreichen, wurden hier verbesserte Systeme entwickelt. Eine erfolgreiche Variante ist die Verwendung des für den siloxanbasierten Decklack notwendigen Haftprimers als UV-Schutzprimer, indem dieser

mit UV-Absorber versetzt und in einer höheren Schichtdicke appliziert wird.

(b) Thermisch härtende Mehrschichtsysteme mit einem UV-Schutzprimer und einem Decklack auf Basis eines Polysiloxanlackes. Geeignete Systeme sind bekannt z.B. aus US 5,391,795 und US 5,679,820 und "Paint & Coating Industrie; July 2001 Seite 64 bis 76: The Next Generation in Weatherable Hardcoats for Polycarbonate" by George Medford / General Electric Silicones, LLC, Waterford, NY; James Pickett / The General Electric Co., Corporate Research and Development, Schenectady, NY; and Curt Reynolds / Lexamar Corp., Boyne City, MI. Ein kommerziell erhältliches System ist das darin erwähnte SHP470 (UV-Schutzprimer) / AS4700 (Decklack) System der Momentive Performance Materials. Dieser SHP470 ist ein haftvermittelnder UV-Schutzprimer auf Basis Polymethymethacrylat unter anderem mit 1-Methoxy-2-propanol und Diacetonalkohol als Lösemittel und Dibenzoylresorcin als UV-Absorber. Der AS4700 Decklack ist ein Polysiloxandecklack mit silyliertem UV-Absorber. Weiterhin sind geeignete Systeme solche, die in der PCT/EP2008/008835 beschrieben sind, enthaltend

a) 100.000 Gewichtsteilen einer Primerzusammensetzung, geeignet als Haftvermittler zwischen einem thermoplastischen Substrat und einem siloxanbasierten Decklack und enthaltend (a1) Bindermaterial, Lösemittel (a2), und UV-Absorber (a3);

b) 0 bis 900.000 Gewichtsteile eines Lösemittels, und

c) 1 bis 3.000 Gewichtsteile einer Verbindung der Formel (I):

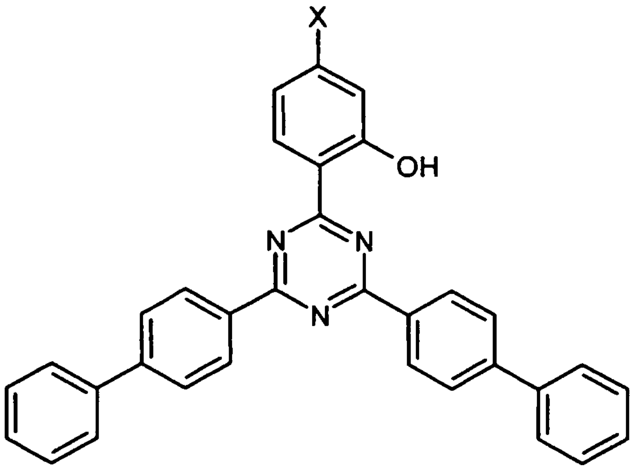

(I)

wobei X = $OR^6$, $OCH_2CH_2OR^6$, $OCH_2CH(OH)CH_2OR^6$ oder $OCH(R^7)COOR^8$, worin

$R^6$ = verzweigtes oder unverzweigtes $C_1$-$C_{13}$-Alkyl, $C_2$-$C_{20}$-Alkenyl, $C_6$-$C_{12}$-Aryl oder -CO-$C_1$-$C_{18}$-Alkyl,

$R^7$ = H oder verzweigtes oder unverzweigtes $C_1$-$C_8$-Alkyl, und

$R^8$ = $C_1$-$C_{12}$-Alkyl; $C_2$-$C_{12}$-Alkenyl oder $C_5$-$C_6$-Cycloalkyl sind,

wobei die Zusammensetzung eine Viskosität von 40sec bis 140sec gemessen nach DIN EN ISO 2431 bei 23°C und einem Auslaufbecher mit einer Düse, die einen Durchmesser von 2 mm aufweist, hat.

Beide Schichten, d.h. Primer und Decklack zusammen übernehmen hierbei die UV-Schutzausrüstung.

(c) Ebenso können UV-härtende Beschichtungssysteme z.B. auf Acrylat-, Urethanacrylat oder Acrylsilanbasis, die gegebenenfalls Füllstoffe zur Verbesserung der Kratzfestigkeit beinhalten, aufgrund ihres größeren Applikationsschichtdickenfensters einen ausreichenden Witterungsschutz bilden. Solche Systeme sind bekannt und u.a. beschrieben in US 3,707,397 oder DE 69 71 7959, US 5,990,188, US 5,817,715, und US 5,712,325. Beispielhaft für eine solche geeignete Beschichtung sind die kommerziell erhältlichen UVHC 3000, UVHC 3000K und UVHC 3000S Systeme der Firma Momentive Performance Materials oder UVT 200 und UVT 610 der Fa. Redspot.

Die hier erwähnten witterungsstabilen Kratzschutzschichten (a) und die hochwitterungsstabilen Kratzschutzschichten (b) und (c) werden auch auf anderen thermoplastischen Substraten wie z.B. Polycarbonatblends verwendet.

Bei vielen flächenhaften Anwendungen mit einer der Witterung ausgesetzten Seite wird nicht nur auf dieser Außenseite eine Schutzschicht benötigt, sondern die weniger der Witterung ausgesetzten Innenseite muss ebenfalls gegen Verkratzen, Chemikalieneinwirkung und in verringertem Maße verglichen mit der Außenseite auch gegen UV-Angriff geschützt werden. In diesen Fällen wird ebenfalls die Bauteilinnenseite direkt d.h. mit demselben Beschichtungssystem mitbeschichtet.

DE 3044450 A1 betrifft schlag- oder stoßfestes Laminat mit einer Anzahl Schlag- oder Stoßaufnehmender Schichten, ausgewählt unter Polycarbonaten, Gläsern und festen Harzmaterialien, einschließlich einer rückwärtigen Polycarbonatschicht gegenüber der Schlag- oder Stoßrichtung, wobei diese Polycarbonatschicht auf der zur Schlagrichtung entgegengesetzten Seite einen kratzfesten Überzug aufweist, der härter und spröder ist als die darunterliegende Polycarbonatschicht, und einer Zwischenschicht, die weniger brüchig als der kratzfeste Überzug ist, angeordnet zwischen der rückwärtigen Polycarbonatschicht und dem kratzfesten Überzug, wobei die Schichten mit einem kompatiblen Kleber aneinander gebunden sind.

DE 10 2004014023A1 betrifft eine Kunststoff-Verbundscheibe mit einer Innen- und einer Außenseite für die Fahrzeugverscheibung, die dadurch gekennzeichnet ist, dass die Innenscheibe und die Außenscheibe durch eine Schicht aus thermoplastischem Polyurethan verbunden sind.

Während die thermisch härtenden Beschichtungssysteme (a) oft noch nicht in ausreichendem Maße witterungsstabil sind, ist bei den beidseitig gleichartig mit hochwitterungsstabilen Kratzschutzschichten (b) und (c) versehenen Bauteilen ein dramatischer Abfall der Zähigkeiten des Gesamtbauteils, insbesondere bei tiefen Temperaturen zu beobachten. Tiefe Temperaturen bedeutet hierbei unter ≤ 0°C, insbesondere ≤ -10°C ≈ 0 bis rund -30°C. Bei Durchstoßversuchen an Bauteilen aus Polycarbonat und dessen Blends mit hochwitterungsstabilen Kratzfestbeschichtungen wurde hier ein Tieftemperaturzähigkeitsverlust bei dynamischer Belastung nach dem beidseitigem Beschichten festgestellt.

## Aufgabenstellung

Ausgehend vom Stand der Technik war es daher eine Aufgabe, einen Scheibenaufbau zur Verfügung zu stellen, der die gewünschten Bewitterungs- und Kratzfesteigenschaften und die nötige Tieftemperaturzähigkeit aufweist.

## Lösung des Problems

Die vorliegende Erfindung betrifft daher einen Mehrschichtverbund umfassend in dieser Reihenfolge Schicht A), Schicht B) und Schicht C), wobei

Schicht A) ein Kratzfestlack ist;
Schicht B) ein Thermoplast ist;
Schicht C) ein Kratzfestlack ist;

dadurch gekennzeichnet, dass Schicht A) ungleich Schicht C) ist, und wobei ein Mehrschichtverbund mit auf beiden Seiten der Schicht B) angeordneten Schichten A) eine niedrigere kritische Auftreffgeschwindigkeit für den zäh/spröd Übergang bei -30°C in Anlehnung an DIN EN ISO 6603-1 aufweist als ein Mehrschichtverbund mit auf beiden Seiten der Schicht B) angeordneten Schichten C).

Mit anderen Worten ausgedrückt betrifft die Erfindung daher einen Mehrschichtverbund umfassend in dieser Reihenfolge Schicht A), Schicht B) und Schicht C), wobei

Schicht A) ein Kratzfestlack ist;
Schicht B) ein Thermoplast ist;
Schicht C) ein Kratzfestlack ist;

dadurch gekennzeichnet, dass Schicht A) ungleich Schicht C) ist, und wobei Schicht A) in einem Mehrschichtverbund mit identischen Schichten A) und C) eine niedrigere kritische Auftreffgeschwindigkeit für den zäh/spröd Übergang bei -30°C in Anlehnung an DIN EN ISO 6603-1 aufweist als Schicht C) in einem Mehrschichtverbund mit identischen Schichten A) und C).

Ohne an die Theorie gebunden zu sein, sind die verbesserten Eigenschaften des Gegenstandes der vorliegenden Erfindung dadurch begründet, dass diejenige Beschichtung, die sich in der Zugzone befindet, überwiegend das Bruchverhalten bestimmt. Die auf Druck belastete Außenseite (Kontaktfläche des Impaktors) beeinflusst das Bruchverhalten nur untergeordnet. Dementsprechend zeigen einseitig mit hochwitterungsstabilen Systemen beschichtete Musterteile bei einem Durchstoßversuch nach DIN EN ISO 6603 auf der Außen- oder Witterungsseite zähes Verhalten.

Damit lässt sich in anderen Worten die gestellte Aufgabe mit einem asymmetrischen Multilagenaufbau lösen,

- der aus einem thermoplastischen Substrat besteht,
- welches auf der Außenseite mit einem Lack A der Kategorie "hochwitterungsstabiler Kratzfestlack" beschichtet ist und
- auf der Innenseite mit einem Lack B der Kategorie "Kratzfestlack" beschichtet ist, der die Tieftemperaturzähigkeit des thermoplastischen Substrats nur unwesentlich negativ beeinflusst.

Diese unwesentlich negative Beeinflussung der Tieftemperaturzähigkeit ist dadurch gekennzeichnet, dass eine beidseitige Beschichtung des thermoplastischen Substrats mit diesem Lack B der Kategorie "Kratzfestlack" noch eine kritische Auftreffgeschwindigkeit für den zäh/spröd Übergang bei -30°C in Anlehnung an DIN EN ISO 6603 von >2,5 m/s, insbesondere >3m/s ergibt und damit auch ein entsprechend zähes Verhalten des erfindungsgemäßen asymmetrischen Aufbaus gewährleistet.

Die kommerziellen Lacksysteme SHP401/AS4000, PHC587 und dessen Modifikationen (PHC587B und PHC587C) sowie das System SHP470/AS4700 mit einer Schichtdicke SHP470 < ca. 1,5 μm (im folgenden genannt "Dünnschicht") von Momentive Performance Materials zeigen eine ausreichende Tieftemperaturzähigkeit, dadurch gekennzeichnet, dass eine beidseitige Beschichtung eines thermoplastischen Substrats wie Polycarbonat mit diesem Lacken noch eine Auftreffgeschwindigkeit für den zäh/spröd Übergang bei -30°C in Anlehnung an DIN EN ISO 6603 von >3m/s ergibt.

Die Bewitterungseigenschaften dieser Systeme liegen jedoch unter den hier erforderlichen Anforderungen, weshalb sie nicht in Schicht A Verwendung finden können.

Im Gegensatz dazu erfüllt das kommerzielle System SHP470/AS4700 mit einer Schichtdicke des SHP470 > ca. 2 μm (im folgenden genannt "Dickschicht") zwar die Bewitterungsanforderungen, reduziert die Tieftemperaturzähigkeit des Substrates aber auf ein nicht akzeptables Niveau, wobei eine beidseitige Beschichtung eines thermoplastischen Substrats wie Polycarbonat mit diesem Lack eine Auftreffgeschwindigkeit für den zäh/spröd Übergang bei -30°C in Anlehnung an DIN EN ISO 6603 von <3m/s ergibt. Dementsprechend eignet sich dieser Lack nicht als Schicht C.

Ebenso wurde ein Tieftemperaturzähigkeitsverlust bei dynamischer Belastung nach dem beidseitigen Beschichten eines thermoplastischen Substrats wie Polycarbonat mit UVhärtenden hochwitterungsstabilen Systemen wie zum Beispiel UVHC 3000 festgestellt, so dass auch diese Systeme nicht für Schicht C in Frage kommen.

Die vorliegende Erfindung betrifft also weiterhin den erfindungsgemäßen Mehrschichtverbund, wobei SHP 470 (Dickschicht) / AS4700 oder UVHC 3000 als Lack A und beispielsweise aber nicht einschränkend SHP 470 (Dünnschicht) /AS4700 oder SHP 401 / AS4000 oder PHC 587 oder PHC 587- Modifikationen als Lack B dienen.

**Definitionen**

Der Ausdruck Mehrschichtverbund bedeutet im Rahmen der vorliegenden Erfindung einen zusammenhängenden Verbund aus mehreren Schichten.

Der Ausdruck thermoplastisches Substrat bedeutet im Rahmen der vorliegenden Erfindung Polycarbonat, Polyestercarbonat, Polyester (wie beispielsweise Polyalkylenterephthalat), Polyphenylenether, Pfropfcopolymere (wie beispielsweise ABS) und deren Mischungen. Die geeigneten Thermoplasten können zusätzlich Füllstoffe wie z. B. Glasfaser oder mineralische Füllstoffe, sowie Schlagzähmodifikatoren, Formtrennmittel und Stabilisatoren enthalten.

Beispielhaft aber nicht einschränkend sind u.a. Makrolon® AG 2677 (mittelviskoses Bisphenol A-Polycarbonat mit UV-Stabilisator und Formtrennmittel; MFR 13 g/10min nach ISO1133 bei 300°C und 1,2 kg), Makrolon® AL 2647 (mittelviskoses Bisphenol A-Polycarbonat mit UV-Stabilisator und Formtrennmittel; MFR 13 g/10min nach ISO1133 bei 300°C und 1,2 kg), Makrolon® 3103 (mittelviskoses Bisphenol A-Polycarbonat mit UV-Stabilisator und Formtrennmittel; MFR 6,5 g/10min nach ISO1133 bei 300°C und 1,2 kg), Makrolon® 2405 (mittelviskoses Bisphenol A-Polycarbonat mit UV-Stabilisator und Formtrennmittel; MFR 20 g/10min nach ISO1133 bei 300°C und 1,2 kg) Bayblend® T 95MF (mineralgefülltes PC+ABS-Blend, MFR 18 g/10min nach ISO1133 bei 260°C und 5 kg), Makroblend® 7665 (mineralgefülltes PC+PET-Blend, MFR 4 g/10min nach ISO1133 bei 260°C und 5 kg) ) genannt.

Der Ausdruck Lack A (Kategorie "hochwitterungsstabiler Kratzfestlack") bedeutet im Rahmen der vorliegenden Erfindung das oben beschriebene thermisch härtende Mehrschichtsystem mit einem UV-Schutzprimer (Dickschicht) und einem Decklack auf Basis eines Polysiloxanlackes (b) oder das oben beschriebene UV-härtende Beschichtungssystem auf Acrylat-, Urethanacrylat oder Acrylsilanbasis (c).

Der Ausdruck Lack B (Kategorie "Kratzfestlack") bedeutet im Rahmen der vorliegenden Erfindung das oben beschriebene thermisch härtende Beschichtungssystem auf Basis eines Polysiloxanlackes (a) oder das oben beschriebene thermisch härtende Mehrschichtsystem mit einem UV-Schutzprimer (Dünnschicht) und einem Decklack auf Basis eines Polysiloxanlackes (b).

Im Rahmen der vorliegenden Erfindung beschreibt mithin der Ausdruck Lack bzw. Kratzfestlack ein System, welches aus einem Decklack (Topcoat) und optional aus einer Primerschicht besteht.

Der Ausdruck "Schicht A) ist ungleich Schicht C)" beschreibt im Rahmen der vorliegenden Erfindung Schichten, die sich entweder durch die gewählten Lacksysteme oder durch die Dicke der Primerschichten und optional der Decklackschichten unterscheiden.

Beschreibung der Systeme:

PHC 587 und dessen Modifikationen (PHC 587 B; PHC 587 C) oder SPH 401 / AS 4000: enthaltend

a. Siliciumorganische Verbindungen der allgemeinen Formel $R'_nSi(OR)_{4-n}$ oder partielle Kondensate derselben;
b. anorganische Nanopartikel, bevorzugt aus $SiO_2$;
c. Lösemittel auf Alkoholbasis;
d. gegebenenfalls UV-Absorber, bevorzugt silylierter UV-Absorber

sowie einen organischen Haftvermittler auf Acrylatbasis als Additiv in dem die siliciumorganische Verbindung enthaltenden Lack.

R' und R stehen hierbei beispielsweise für organische Reste wie aliphatische Reste (Alkyl), aromatische Reste (Phenyl oder Naphtyl) oder Reste mit aliphatischem und aromatischem Anteil (z.B. Benzyl).

SPH 401 / AS 4000:

Der Decklack AS 4000 enthaltend

a. Siliciumorganische Verbindungen der allgemeinen Formel $R'_nSi(OR)_{4-n}$ oder partielle Kondensate derselben;
b. anorganische Nanopartikel, bevorzugt aus $SiO_2$;
c. Lösemittel auf Alkoholbasis;
d. gegebenenfalls UV-Absorber, bevorzugt silylierter UV-Absorber

R' und R stehen hierbei beispielsweise für organische Reste wie aliphatische Reste (Alkyl), aromatische Reste (Phenyl oder Naphtyl) oder Reste mit aliphatischem und aromatischem Anteil (z.B. Benzyl).

Die separate Primerlackformulierung SPH 401 enthaltend einen organischen Haftvermittler, die auf das Substrat aufgebracht wird, abgelüftet und getrocknet wird, bevor im Anschluss der Lack mit den Komponenten a bis d appliziert wird.

SHP 470 / AS 4700 und SHP 470 FT 2050 / AS 4700:

Der polysiloxanbasierte Decklack AS 4700 enthaltend

a. Siliciumorganische Verbindungen der allgemeinen Formel $R'_nSi(OR)_{4-n}$ oder partielle Kondensate derselben;
b. anorg. feinteilige Verbindung, bevorzugt $SiO_2$;
c. ein Lösemittel auf Alkoholbasis;
d. gegebenenfalls UV-Absorber und weitere Additive.

R' und R stehen hierbei beispielsweise für organische Reste wie aliphatische Reste (Alkyl), aromatische Reste (Phenyl oder Naphtyl) oder Reste mit aliphatischem und aromatischem Anteil (z.B. Benzyl).

Die separate Primerlackformulierung SHP 470 bzw. SHP 470 FT 2050 oder vergleichbare Systeme enthaltend

a. organisches Bindematerial, das eine Haftvermittlung zwischen PC und einem polysiloxanbasierten Lack ermöglicht,
b. UV-Absorber,
c. ein Lösemittel;

die auf das Substrat aufgebracht wird, abgelüftet und getrocknet wird, bevor im Anschluss der Lack mit den Komponenten a bis d appliziert wird.

UVHC 3000:
enthält

a. eine oder mehrere Polymervorstufen ausgewählt aus einer der Gruppen bestehend aus den Komponenten $a_1$ und $a_2$, wobei

$a_1$ Oligomere mit mindestens einer Acrylatfunktion oder deren Mischungen
$a_2$ Reaktiwerdünner mit mind. einer Acrylatfunktion oder Mischungen entsprechender Reaktivverdünner;

b. gegebenenfalls feinteilige anorg. Verbindung bevorzugt $SiO_2$ Partikel;

c. Photoinitiator;
d. UV-Absorber;
e. Lösemittel.

Geeignete UV-Absorber sind bevorzugt Derivate der folgenden allgemeinen Gruppen: Benzotriazole, Oxalanilide, 2-Cyanacrylate, Benzilidinmalonate und Formamidine sowie Benzophenone, insbesondere Dibenzolyresorcine, und Triazine, insbesondere 2-(2-Hydroxyphenyl)-1,3,5-triazine.

Die vorliegende Erfindung betrifft weiterhin den erfindungsgemäßen Mehrschichtverbund für Platten- und Spritzgussteile für Außenanwendungen wie Architekturverscheibung, Automobilverscheibung oder Karosserrieabdeckteile. Dies sind z.B Seitenblenden von Kraftfahrzeugen, Seitenscheiben, Heckscheiben, oder Dachanwendungen.

Die Bewertung der Zähigkeit erfolgte dabei anhand eines Falltests aufbauend auf der Norm DIN EN ISO 6603-1. Analog zur Norm wird hierbei ein Durchstoßversuch mit variierter Fallenergie durchgeführt, wobei dieser durch Variation der Fallhöhe bei konstanter Fallmasse erfolgt. Als Maß für die Fallenergie wird die Auftreffgeschwindigkeit direkt mittels Lichtschranke gemessen und als Variationsparameter angegeben.

Abweichend von der Norm wird eine Kombination aus Auflagerdurchmesser und Domdurchmesser von 40 mm bzw. 20 mm und eine Probengröße von 50x50 $mm^2$ verwendet. Die Fallmasse betrug 13 kg, die Prüftemperatur lag bei -30°C.

Zur Charakterisierung der Zähigkeit wurde die Tatsache genutzt, dass polymere Werkstoffe bei Variation bestimmter Parameter (z.B. Temperatur, Deformationsrate, Kerbradius, o.ä.) einen Übergang von zähem zu sprödem Bruchverhalten zeigen. Im vorliegenden Fall wurde die Auftreffgeschwindigkeit des Dorns auf die Probenoberseite als variabler Parameter verwendet.

Als für die Zähigkeit charakteristischer Kennwert wurde eine "kritische Auftreffgeschwindigkeit" definiert, die sich aus dem geometrischen Mittelwert von größter Geschwindigkeit mit zähem und kleinster Geschwindigkeit mit sprödem Bruchverhalten darstellt:

$$v_{krit} := 0.5 * [\max(v_{zäh}) + \min(v_{spröd})].$$

Zur Bestimmung dieses Zähigkeitskennwertes wurde die kritische Auftreffgeschwindigkeit in einem geeigneten Bereich variiert und das zu einer gewählten Geschwindigkeit gehörende Bruchverhalten (zäh / spröd) bestimmt. Die Art des Bruches (Zäh- / Sprödbruch) wurde anhand des Bruchbildes der geschlagenen Prüfkörper ermittelt: Als Zähbruch gilt dabei sowohl eine plastische Deformation ohne Rissbildung (normgemäß), als auch (abweichend von der Norm) ein Durchstoßen des Probekörpers, wenn er in einem Stück verbleibt - als Sprödbruch wird das Zerbrechen der Probe in zwei oder mehr Teile gewertet.

Die gemessenen kritischen Auftreffgeschwindigkeiten liegen zwischen 2 - 2.5 m/s und 13 m/s. Proben, die auch bei minimaler Auftreffgeschwindigkeit einen Sprödbruch zeigen, werden generell als spröde beurteilt, die kritische Auftreffgeschwindigkeit wird mit "< 2.5 m/s" angegeben.

Jeder Multilagenaufbau ist damit durch die kritische Auftreffgeschwindigkeit charakterisiert und kann damit mit anderen Systemen verglichen und beurteilt werden.

Naturgemäß beeinflusst die Dicke der Prüfkörper das Deformations- und Bruchverhalten unter mechanischer Beanspruchung. Insbesondere zeigen die absoluten Messwerte (Maximalkraft, Bruchdehnung, ...) eine Abhängigkeit von der Probendicke und können für unterschiedlich dicke Prüfkörper nicht direkt miteinander verglichen werden. Daher wurden im Rahmen der vorliegenden Erfindung Proben mit 5 mm Dicke verwendet, deren Verhalten miteinander verglichen werden kann und deren Dicke in einer für viele Anwendungen wie Verscheibungen typischen Größe liegt.

Die relativen Unterschiede in der Zähigkeit der verschiedenen Systeme - in Form der Lage des Zäh/Spröd-Überganges bzw. der kritischen Auftreffgeschwindigkeit - lassen sich aber auch auf andere Probendicken übertragen. Die hier beispielhaft an 5 mm dicken Prüflingen ermittelten relativen Zähigkeitsunterschiede zwischen den verschiedenen Lacksysteme und - aufbauten gelten daher auch für Proben mit größeren oder kleineren Dicken.

Der Ausdruck Zugzone bedeutet hierbei die Probenseite, die dem Impaktor gegenüber liegt und daher im Durchstoßversuch auf Zugbeanspruchung belastet wird. Im Gegensatz dazu bezeichnet Druckzone den Probenbereich unter dem Impaktor auf der Auftreffseite, wo größtenteils eine Druckbelastung erfolgt.

In einer weiteren Ausführungsform betrifft die vorliegende Erfindung einen solchen Mehrschichtverbund, gekennzeichnet dadurch, dass der Kratzfestlack in Schicht A) eine um mehr oder gleich 2 m/s niedrigere kritische Auftreffgeschwindigkeit aufweist als der Kratzfestlack in Schicht C). Bevorzugt ist die kritische Auftreffgeschwindigkeit um mehr oder gleich 1,5 m/s niedriger, insbesondere 2 m/s und ganz besonders 2,5 m/s.

In einer weiteren Ausführungsform betrifft die vorliegende Erfindung einen solchen Mehrschichtverbund, gekennzeichnet dadurch, dass der Kratzfestlack in Schicht C) bei beidseitiger Beschichtung des thermoplastischen Substrats eine kritische Auftreffgeschwindigkeit für den zäh/spröd Übergang bei -30°C in Anlehnung an DIN EN ISO 6603-1 bei einer Dicke des Mehrschichtverbundes von 5mm von größer 2,5 m/s, besonders größer 3 m/s, insbesondere größer 3,3 m/s hat, wenn Schicht C in der Zugzone liegt

In einer weiteren Ausführungsform betrifft die vorliegende Erfindung ein Verfahren zum Herstellen eines Mehrschichtverbundes umfassend Schicht A), Schicht B) und Schicht C), umfassend die Schritte i) Positionieren der Schicht B), so dass eine Kante der Schicht B) tiefer liegt als die höherliegende Kante; ii) Anfluten der Schicht B) an der Oberseite der höherliegenden Kante mit flüssigem Kratzfestlack unter Bildung einer Schicht A); iii) Anfluten der Schicht B) an der Unterseite der höherliegenden Kante mit flüssigem Kratzfestlack unter Bildung einer Schicht C); und iv) Trocknung der Lacke. Insbesondere ist dieses Verfahren zur Herstellung des erfindungsgemäßen Mehrschichtverbundes geeignet. In einer weiteren Ausführungsform betrifft die vorliegende Erfindung dieses Verfahren, dadurch gekennzeichnet, dass Schritte ii) und iii) im wesentlichen zeitgleich erfolgen, besonders im Abstand von 1 bis 30 min, 1 bis 10 min, 2 bis 5 min oder 2 bis 3 min erfolgen.

Herstellung des Multilagenaufbaus (Beschreibung Substratherstellung; Beschreibung Beschichtungsverfahren)

Aus den oben beschriebenen thermoplastischen Substraten lassen sich Formkörper durch Spritzguss und durch Extrusion herstellen. Die Verfahren hierzu sind bekannt und im "Handbuch Spritzgießen", Friedrich Johannnaber/ Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Spritzgießen ist ein Urformverfahren, welches in der Kunststoffverarbeitung eingesetzt wird. Mit diesem Verfahren lassen sich wirtschaftlich direkt verwendbare Formteile in großer Stückzahl herstellen. Dazu wird mit einer Spritzgießmaschine der jeweilige Werkstoff, beziehungsweise die Formmasse, in einer Spritzeinheit plastifiziert und in ein Spritzgießwerkzeug eingespritzt. Der Hohlraum, die Kavität, des Werkzeugs bestimmt die Form und die Oberflächenstruktur des fertigen Bauteils.

Spritzguss umfasst hier alle Spritzgießverfahren einschließlich Mehrkomponentenspritzguss und Spritzprägeverfahren.

Zur Herstellung von ein- und mehrkomponentigen Kunststoffformteilen werden die in der Kunststoffverarbeitung bekannten Spritzguss- und Spritzprägevarianten eingesetzt. Herkömmliche Spritzgussverfahren ohne Spritzprägetechnik werden insbesondere für die Herstellung von kleineren Spritzgießteilen verwendet, bei welchen kurze Fließwege auftreten und mit moderaten Spritzdrücken gearbeitet werden kann. Beim herkömmlichen Spritzgussverfahren wird die Kunststoffinasse in eine zwischen zwei geschlossenen lagefesten Formplatten ausgebildete Kavität eingespritzt und verfestigt sich dort. Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden. Dies ist besonders bei der Herstellung von optischen Kunststoffanwendungen, wie beispielsweise Verscheibung (Fenster) in Kraftfahrzeugen, wichtig, da bei optischen Kunststoffanwendungen erhöhte Anforderungen an die Spannungsfreiheit einzuhalten sind.

Mehrkomponentige Kunststoff-Formteile können durch Anspritzen oder Überspritzen der zweiten Kunststoffkomponente an die vorgefertigte erste Komponente des Formteils hergestellt werden. Hierfür wird eine Anspritzformplatte (eine zweite Kavität im Drehplattenwerkzeug) an die bereits vorgefertigte erste Komponente des Kunststoffformteils angesetzt, wobei zwischen der ersten Komponente des Kunststoffformteils und der Anspritzformplatte ein Freiraum zur Bildung der zweiten Komponente vorhanden ist.

Makrolon®, Bayblend® und Makroblend® muss vor der Verarbeitung getrocknet werden, da Feuchtigkeit in der Schmelze zu Oberflächenstörungen sowie zu einem erhöhten Molekulargewichtsabbau führt. Das Trocknen von Makrolon®, Bayblend® und Makroblend® erfolgt in hierfür geeigneten Trocknern. Die Trocknungsdauer von feucht gewordenem Granulat richtet sich weitgehend nach Art und Typ des Trockengerätes und kann je nach Trockenleistung zwischen 2 und 12 Stunden betragen.

Zur Verarbeitung von Makrolon®, Bayblend® und Makroblend® sind alle modernen Spritzgießmaschinen geeignet. Die bei der Verarbeitung gebräuchlichen Massetemperaturen liegen für Makrolon® im Allgemeinen zwischen 280 bis 320 °C, sowie beim Bayblend® zwischen 240 bis 280°C und Makroblend® bei 240 bis 280°C

Die Werkzeuge sollen intensiv und gleichmäßig temperiert sein. Die Werkzeugtemperatur sollte um möglichst spannungsarme Teile mit guter Oberfläche zu erzielen, bei Makrolon mindestens 80 °C und bei den Makroblend®- und Bayblend®typen zwischen 60°C und 80°C betragen

Die hergestellten Bauteile werden zur Vermeidung von Kontaminationen bis zur Beschichtung in additivfreien Polyethylenbeuten gelagert

Bei der Extrusion werden Kunststoffe oder andere zähflüssige härtbare Materialien in einem kontinuierlichen Verfahren durch eine Düse gepresst. Dazu wird der Kunststoff- das Extrudat - zunächst durch einen Extruder mittels Heizung und innerer Reibung aufgeschmolzen und homogenisiert. Weiterhin wird im Extruder der für das Durchfließen der Düse notwendige Druck aufgebaut. Nach dem Austreten aus der Düse erstarrt der Kunststoff meist in einer wassergekühlten Kalibrierung. Das Anlegen von Vakuum bewirkt, dass sich das Profil an die Kaliberwand anpresst und somit die Formgebung abgeschlossen wird. Im Anschluss darauf folgt oft noch eine Kühlstrecke in Form eines gekühlten Wasserbades. Der Querschnitt des so entstehenden geometrischen Körpers entspricht der verwendeten Düse oder Kalibrierung. Die möglichen Fertigungstoleranzen bewegen sich im Bereich von +/- 0,05 mm.

Zur Extrusionsverarbeitung ist der hochviskose Makrolon® 3103 Typ besonders geeignet. Es können daraus nach bekannten Verarbeitungsverfahren Platten hergestellt werden. Es kommen fast ausschließlich Einschneckenextruder zum Einsatz. Die Temperaturführung erfolgt über ein fallendes Zylinder-Temperaturprofil vom Fülltrichter zum Werkzeug. von. 280 °C auf 250 °C. Die Massetemperatur am Werkzeugaustritt beträgt je nach Verarbeitungsverfahren 240 °C bis 300 °C. Anschließend erfolgt ein Auswalzen der Platte auf einem Glättkalander. Anschließend werden die Plattenbeidseitig mit einer Kaschierfolie versehen und in transportable Platten gefräst.

Bei der Extrusionsware werden die Musterplatten durch geeignete Verfahren herauspräpariert. Diese sind u.a. Sägen, Schneiden, Stanzen Fräsen, Laserschneiden.

**Beschichtung**

**Beschreibung Beschichtungsverfahren**

Die Applikation der Primer- und Topcoatlacke kann über Fluten oder Sprühen erfolgen. Besonders bevorzugt ist das Flutverfahren ("Fluten") aufgrund der resultierenden hohen optischen Qualität. Das Flutverfahren kann manuell mit Schlauch oder geeignetem Beschichtungskopf oder automatisch im Durchlauf über Flutlackierroboter- und gegebenenfalls Schlitzdüsen erfolgen

Hierbei könne die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zuschichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten wurden senkrecht an einer Klammer hängend nach den jeweiligen Herstellervorgaben abgelüftet und gehärtet.

**Beispiele**

Im Folgenden beziehen sich die Mengen, wenn nicht anders genannt, auf Gew-%.

Alle Lösemittel wurden als technische Ware bezogen und nicht getrocknet eingesetzt.

Vorbehandlung/Reinigung der Musterbauteile

Vor dem Beschichten wurden die Polycarbonatplatten mit ionisierter Luft zum Entfernen von anhaftenden Verunreinigungen abgeblasen.

Feststoffgehaltsbestimmung (Methode A):

Der Feststoffgehalt der Lacke wurde mit Hilfe des Feststofftesters Sartorius MA40 bestimmt, wobei eine gewogene Lackprobe so lange bei 140°C eingedampft wurde, bis Massekonstanz erreicht wurde. Der Feststoffgehalt ergibt sich dann in Prozent aus dem Quotienten Masse nach zu Masse vor dem Eindampfen. Der Feststoffgehalt des Lackes nach Härten des Lackes beträgt hierbei im einfachsten Fall Lackgewicht abzüglich Lösungsmittelgewicht.

Schichtdickenbestimmung (Methode B):

Die Schichtdicke der gehärteten Lacke wurde über Weißlichtinterferenz mit Hilfe des Messgerätes Eta SD30 der Firma Eta Optik GmbH, Deutschland bestimmt.

Bestimmung der Haftungseigenschaften (Methode C):

Die Haftung der Beschichtungen wurden über folgende Tests bestimmt a.) Klebebandabriss (verwendetes Klebeband 3M® 610) ohne und mit Gitterschnitt (analog zu ISO 2409 bzw. ASTM D 3359); b.) Klebebandabriss nach 4 h Lagerung in kochendem Wasser. Die Tests a) und b) sind bestanden, wenn es zu keinerlei Abriss der Beschichtung (Bewertung 0 gemäß ISO 2409 bzw. 5B gemäß ASTM D 3359) kam. In der ISO 2409 bedeutet die Bewertung 0 bzw. in der ASTM D 33595B 5B das keine Ablösung erkennbar ist.

Zähigkeit

Die Bewertung der Zähigkeit erfolgte dabei anhand eines Falltests aufbauend auf der Norm DIN EN ISO 6603-1.

Durchführung der Beschichtung

Die Beschichtung erfolgte in einem klimakontrollierten Beschichtungsraum unter den jeweiligen Vorgaben des Lackherstellers bei 23 bis 25°C und 40 bis 48% rel. Feuchte.

Die Musterplatten wurden mit sogenannten Iso-Tüchem (LymSat® der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

Die Verarbeitung der Primer und Lacke erfolgt nach Herstellerangabe. Hier können die Primer und Lacke im Anlieferungszustand, als auch zur Erzielung des vorgegebenen Schichtdickenfensters nach Verdünnen mit geeigneten Lösemitteln eingesetzt werden.

**Beispiel 1 AS 4700/AS 4000 (erfindungsgemäβ)**

Es wurde eine Primerlösung bestehend aus dem kommerziell erhältlichen Dickprimer SHP 470 (Feststoffgehalt 9,90%) und einem 1:1 Lösemittelgemisch aus Diacetonalkohol und 1-Methoxy-2-propanol hergestellt, indem 300,0g SHP 470 (9,9 Gew-%ig) vorgelegt und unter Rühren mit je 97,5g Diacetonalkohol und 1-Methoxy-2-propanol versetzt wurde.

Dieser Primer wurde einseitig im Flutverfahren auf 5 mm Polycarbonatplatten, (spritzgegossene PC - Platten in optischer Qualität aus Makrolon® AG 2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 1.5 x 0,5 cm aufgebracht

Die Beschichtung erfolgte per Hand. Hierbei wird die zuschichtende flüssige SHP470-Primer-Lösung ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Die geprimerte Platte wurde senkrecht an einer Klammer hängend nach den jeweiligen Herstellervorgaben bis zur Staubtrockene abgelüftet und im Umluftofen gehärtet. Nach dem Abkühlen auf Raumtemperatur erfolgte die Beschichtung der geprimerten Fläche mit AS 4700. Nach dem Ablüften zur Staubtrockenen kann die unbeschichtete Rückseite mit SHP 401 nach dem selben Arbeitsverfahrenbeschichtet werden. Die so beschichteten Platte wurden wieder nach den jeweiligen Herstellervorgaben bis zur Staubtrockene abgelüftet.

Anschließend wurde die mit SHP 401 geprimerte Platte mit AS 4000 überbeschichtet. Nach der Ablüftung bis zur Staubtrockene erfolgte die Härtung 60 min bei 130°C im Umluftofen.

Die Dicke der so erhaltenen transparenten zweilagigen Beschichtung (Primer SHP 470 / Topcoat AS4700) wurde nach Methode B bestimmt, die Haftung der Beschichtung über die Methode C.

**Beispiel 2 AS 4700/PHC 587 (erfindungsgemäß)**

Es wurde eine Primerlösung bestehend aus dem kommerziell erhältlichen Dickprimer SHP 470, (Feststoffgehalt 9,90% und einem 1:1 Lösemittelgemisch aus Diacetonalkohol und 1-Methoxy-2-propanol hergestellt, indem 300,0g SHP 470 (9,9 Gew-%ig) vorgelegt und unter Rühren mit je 97,5g Diacetonalkohol und 1-Methoxy-2-propanol versetzt wurde, hergestellt.

Dieser Lack wurde einseitig im Flutverfahren auf 5 mm Polycarbonatplatten (spritzgegossene PC - Platten in

optischer Qualität aus Makrolon® AG 2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 05 cm aufgebracht.

Die Beschichtung erfolgte per Hand. Hierbei wird die zuschichtende flüssige SHP470-Primer-Lösung ausgehend von der oberen Kante des Kleinteils in Längsrichtung über die Platte gegossen, während gleichzeitig der Ansatzpunkt des Primers auf der Platte von links nach rechts über die Plattenbreite geführt wird. Die geprimerte Platte wurden senkrecht an einer Klammer hängend nach den jeweiligen Herstellervorgaben bis zur Staubtrockene abgelüftet und im Umluftofen gehärtet. Nach dem Abkühlen auf Raumtemperatur erfolgte die Beschichtung der geprimerten Fläche mit AS 4700. Nach 120 sec Ablüftzeit erfolgt die rückseitige Beschichtung mit dem Primerless-Hardcoat PHC 587. Nach der Ablüftung bis zur Staubtrockene erfolgte die Härtung im Umluftofen.

Die Ausprüfung der Lackeigenschaften erfolgte nach Beispiel 1.

**<u>Beispiel 3 UVHC 3000/ PHC 587 (erfindungsgemäβ)</u>**

Es wurde eine Beschichtungslösung bestehend aus kommerziell erhältlichen UVHC 3000 einseitig im Flutverfahren auf 5 mm Polycarbonatplatten (spritzgegossene PC - Platten in optischer Qualität aus Makrolon® AG2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 0,5 cm aufgebracht.

Die Beschichtung erfolgte per Hand. Hierbei wird der zubeschichtende UVHC 3000 ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Dieser wird vor dem Fluten üblicherweise zur Viskositätsreduzierung herunterverdünnt. Übliche Lösemittel sind u.a. Methoxypropanol, Diacetonalkohol oder deren Mischungen. Nach einer Abdunstzeit von 5 min wurden die Platten 6 min bei 75°C vorgehärtet. Anschließend erfolgte die UV-Härtung mit einer Dosis von - 6 - 8 J/cm$^2$ mit einer Quecksilber dotierten UV-Lampe (80W/cm. Nach dem Abkühlen auf Raumtemperatur erfolgte die Beschichtung der unbeschichteten Seite mit PHC 587. Die beschichteten Platte wurde senkrecht an einer Klammer hängend nach den jeweiligen Herstellervorgaben bis zur Staubtrockene abgelüftet

Nach 30 min Abdunstung bei Raumtemperatur wurde 60 min bei 130°C im Umluftofen gehärtet.

Die Ausprüfung der Lackeigenschaften erfolgte nach Beispiel 1.

**<u>Beispiel 4 beidseitig SHP470 (Dickschicht) / AS 4700 (nicht erfindungsgemäß)</u>**

Es wurde eine Primerlösung bestehend aus dem kommerziell erhältlichen Dickprimer SHP 470 (Momentive Performance Materials Inc. Wilton, CT USA), (Feststoffgehalt 9,90% & Viskosität 4 mm Becher 46,25 s (Bestimmung siehe Methode A & B) und einem 1:1 Lösemittelgemisch aus Diacetonalkohol und 1-Methoxy-2-propanol hergestellt, indem 300,0g SHP 470 (9,9 Gew-%ig) vorgelegt und unter Rühren mit je 97,5g Diacetonalkohol und 1-Methoxy-2-propanol versetzt wurde, hergestellt.

Dieser Lack wurde beidseitig im Flutverfahren auf 5 mm Polycarbonatplatten (spritzgegossene PC - Platten in optischer Qualität aus Makrolon® AG2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 0,5 cm aufgebracht.

Die Beschichtung erfolgte per Hand. Hierbei wird die zuschichtende flüssige SHP470-Primer-Lösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Bei der beidseitigen Beschichtung erfolgt die Beschichtung der Rückseite unmittelbar nach der Vorderseite.

Die geprimerte Platte wurden senkrecht an einer Klammer hängend 30 min bei Raumtemperatur abgelüftet und 15 min bei 125°C im Umluftofen gehärtet.

Nach dem Abkühlen auf Raumtemperatur erfolgte die Beschichtung der geprimerten Fläche mit AS 4700. Bei der beidseitigen Beschichtung erfolgt die Beschichtung der Rückseite unmittelbar nach der Vorderseite.

Die lackierten Platten wurden senkrecht an einer Klammer hängend 30 min bei Raumtemperatur abgelüftet und 60 min bei 130°C gehärtet

Die Ausprüfung der Lackeigenschaften erfolgte nach Beispiel 1.

**<u>Beispiel 5 beidseitig UVHC 3000 (nicht erfindungsgemäß)</u>**

Es wurde eine Beschichtungslösung bestehend aus dem kommerziell erhältlichen UVHC 3000 (Momentive Performance Materials Inc. Wilton, CT USA), einseitig im Flutverfahren auf 5 mm Polycarbonatplatten (spritzgegossene PC - Platten in optischer Qualität aus Makrolon® AG 2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe

10,5 x 15 x 0,5 cm aufgebracht. Die Beschichtung mit UVHC 3000 erfolgte per Hand. Dieser wird vor dem Fluten üblicherweise zur Viskositätsreduzierung herunterverdünnt.

Der zuschichtende UVHC 3000. wird ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Übliche Lösemittel sind u.a. Methoxypropanol, Diacetonalkohol oder deren Mischungen.

Nach einer Abdünstzeit von 5 min wurden die Platten 6 min bei 75°C vorgehärtet. Anschließend erfolgte die UV-Härtung mit einer Dosis von ~ 6 - 8 J/cm$^2$ mit einer Quecksilber dotierten UV-Lampe (80W/cm). Die so erhaltene Musterplatte wurde auf der unbeschichteten Rückseite nun ebenfalls mit UVHC 3000 abgeflutet und nach einer Abdünstzeit von 5 min wurden die Platten 6 min bei 75°C vorgehärtet, Anschließend erfolgte die UV-Härtung mit einer Dosis von ~ 6 - 8 J/cm$^2$ mit einer Quecksilber dotierten UV-Lampe (80W/cm).

Die Ausprüfung der Lackeigenschaften erfolgte nach Beispiel 1.

**Beispiel 6 beidseitig PHC 587 (nicht erfindungsgemäß)**

Es wurde eine Beschichtungslösung bestehend aus dem kommerziell erhältlichen PHC 587 (Momentive Performance Materials Inc. Wilton, CT USA), beidseitig im Flutverfahren auf 5 mm Polycarbonatplatten (spritzgegossene PC - Platten in optischer Qualität aus Makrolon® AG 2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 0,5 cm aufgebracht.

Die Beschichtung erfolgte per Hand. Hierbei wird der zuschichtende Primerless-Hardcoat PHC 587 ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Bei der beidseitigen Beschichtung erfolgt die Beschichtung der Rückseite unmittelbar nach der Vorderseite. Die beschichteten Platte wurden senkrecht an einer Klammer hängend 30 min bei Raumtemperatur abgelüftet und 60 min bei 130°C gehärtet.

Die Ausprüfung der Lackeigenschaften erfolgte nach Beispiel 1.

**Beispiel 7 beidseitig SBP401/AS 4000 (nicht erfindungsgemäß)**

Es wurde eine Primerlösung bestehend aus dem kommerziell erhältlichen SHP 401 (Momentive Performance Materials Inc. Wilton, CT USA), beidseitig im Flutverfahren auf 5 mm Polycarbonatplatten (spritzgegossene PC - Platten in optischer Qualität aus Makrolon® AG 2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 0,5 cm aufgebracht. Die Beschichtung erfolgte per Hand. Hierbei wurde die zu schichtende flüssige SHP401-Primerlösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wurde. Bei der beidseitigen Beschichtung erfolgte die Beschichtung der Rückseite unmittelbar nach der Vorderseite.

Die geprimerten Platten wurden senkrecht an einer Klammer hängend 30 min bei Raumtemperatur abgelüftet.

Diese geprimerten Platten wurden beidseitig mit AS4000 (UV-absorberhaltiger, polysiloxanbasierter Decklack von Momentive Performance Materials), im Flutverfahren überbeschichtet. Bei der beidseitigen Beschichtung erfolgte die Beschichtung der Rückseite unmittelbar nach der Vorderseite. Anschließend wurde 30 min bei Raumtemperatur abgelüftet und 60 min bei 130°C gehärtet. Die Ausprüfung der Lackeigenschaften erfolgte nach Beispiel 1.

**Beispiel 8 Außenseite SHP 470 (Dickschicht)/AS 4700; Innenseite SHP 470 (Dünnschicht)/AS 4700 (erfinduneseemäß)**

Primer-Dickschicht Außenseite:

Es wurde eine Primerlösung bestehend aus dem kommerziell erhältlichen Dickprimer SHP 470 (Feststoffgehalt 9,8 Gew-%ig) und einem 1:1 Lösemittelgemisch aus Diacetonalkohol und 1-Methoxy-2-propanol hergestellt, indem 300,0g SHP 470 (9,8 Gew-%ig) vorgelegt und unter Rühren mit je 100,0g Diacetonalkohol und 1-Methoxy-2-propanol versetzt wurden.

Dieser Primer wurde einseitig im Flutverfahren auf 5 mm Polycarbonatplatten (spritzgegossene PC - Platten in optischer Qualität aus Makrolon® AG 2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 0,5 cm aufgebracht.

Die Beschichtung erfolgte per Hand. Hierbei wurde die zu schichtende flüssige SHP470-Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wurde.

Primer-Dünnschicht Innenseite:

Es wurde eine Primerlösung bestehend aus dem kommerziell erhältlichen Dickprimer SHP 470 (Feststoffgehalt 9,8 Gew-%ig) und einem 1:1 Lösemittelgemisch aus Diacetonalkohol und 1-Methoxy-2-propanol hergestellt, in dem 100,00 g SHP 470 (9,8 Gew-%ig) vorgelegt und unter Rühren mit je 195,0g Diacetonalkohol und 1-Methoxy-2-propanol versetzt wurden. Mit dieser Primerlösung wurde die Innenseite der Platte beschichtet, per Hand wie oben beschrieben.

Deckschichten Außen- und Innenseite:

Die so geprimerte Platte wurden senkrecht an einer Klammer hängend nach den jeweiligen Herstellervorgaben bis zur Staubtrockne abgelüftet und im Umluftofen gehärtet. Nach dem Abkühlen auf Raumtemperatur erfolgte die Beschichtung der geprimerten Flächen mit AS 4700. Nach der Ablüftung bis zur Staubtrockne erfolgte die Härtung 60 min bei 130°C im Umluftofen.

Die Dicken der so erhaltenen transparenten zweilagigen Beschichtung (Primer SHP 470 / Topcoat AS4700) wurde nach Methode B bestimmt, die Haftung der Beschichtung über die Methode C.

**Beispiel 9 Innenseite SHP 470 (Dickschicht)/AS 4700; Außenseite SHP 470 (Dünnschicht)/AS 4700 (nicht erfindungsgemäß)**

Primer-Dickschicht Innenseite:

Es wurde eine Primerlösung bestehend aus dem kommerziell erhältlichen Dickprimer SHP 470 (Feststoffgehalt 9,80%) und einem 1:1 Lösemittelgemisch aus Diacetonalkohol und 1-Methoxy-2-propanol hergestellt, indem 100,0g SHP 470 (9,8 Gew-%ig) vorgelegt und unter Rühren mit je 195g Diacetonalkohol und 1-Methoxy-2-propanol versetzt wurden.

Dieser Primer wurde einseitig im Flutverfahren auf 5 mm Polycarbonatplatten (spritzgegossene PC - Platten in optischer Qualität aus Makrolon® AG 2677 (Bayer MaterialScience AG; mittelviskoses Bisphenol A-Polycarbonat mit UV-Stabilisator und Formtrennmittel; MFR 13 g/10min nach ISO1133 bei 300°C und 1,2 kg) der Größe 10,5 x 15 x 0,5 cm aufgebracht.

Die Beschichtung erfolgte per Hand. Hierbei wurde die zu schichtende flüssige SHP470-Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wurde.

Primer-Dünnschicht Außenseite:

Es wurde eine Primerlösung bestehend aus dem kommerziell erhältlichen Dickprimer SHP 470 (Feststoffgehalt 9,90%) und einem 1:1 Lösemittelgemisch aus Diacetonalkohol und 1-Methoxy-2-propanol hergestellt, in dem 300,0 g SHP 470 (9,9 Gew-%ig) vorgelegt und unter Rühren mit je 100,0 g Diacetonalkohol und 1-Methoxy-2-propanol versetzt wurden. Mit dieser Primerlösung wurde die Außenseite der Platte beschichtet, per Hand wie oben beschrieben.

Deckschichten Außen- und Innenseite:

Die so geprimerte Platte wurden senkrecht an einer Klammer hängend nach den jeweiligen Herstellervorgaben bis zur Staubtrockne abgelüftet und im Umluftofen gehärtet. Nach dem Abkühlen auf Raumtemperatur erfolgte die Beschichtung der geprimerten Flächen mit AS 4700. Nach der Ablüftung bis zur Staubtrockne erfolgte die Härtung 60 min bei 130°C im Umluftofen.

Die Dicken der so erhaltenen transparenten zweilagigen Beschichtung (Primer SHP 470 / Topcoat AS4700) wurde nach Methode B bestimmt, die Haftung der Beschichtung über die Methode C.

Schichtaufbauten der Beispiele 1 bis 9:

Tabelle 1

| Bsp. | Schichtaufbau | | Feststoffgehalt [%] | | | |
|---|---|---|---|---|---|---|
| | Witterungsseite (Außenseite) | Innenseite | Witterungsseite | | Innenseite (nur bei seitlich unterschiedlichen Beschichtungen) | |
| | | | Primer (%) | Topcoat (%) | Primer (%) | Topcoat (%) |
| | Aufprallseite | Zugzone | | | | |
| 1 | SHP470 (Dickschicht) / AS4700 | SHP401 / AS4000 | 5,9 | 26,0 | 1,8 | 22,5 |
| 2 | SHP470 (Dickschicht) / AS4700 | PHC 587 | 5,9 | 26,0 | | 20,7 |
| 3 | UVHC 3000 | PHC 587 | | 40,0 | | 21,6 |
| 4 | SHP470 (Dickschicht) / AS4700 | SHP470 (Dickschicht) / AS4700 | 5,7 | 26,0 | | |
| 5 | UVHC 3000 | UVHC 3000 | | 34,6 | | |
| 6 | PHC 587 | PHC 587 | | 20,7 | | |
| 7 | SHP401 / AS4000 | SHP401 / AS4000 | 1,8 | 22,5 | | |
| 8 | SHP470 (Dickschicht) / AS4700 | SHP470 (Dünnschicht) / AS4700 | 5,8 | 24,7 | 2,2 | 24,7 |
| 9 | SHP470 (Dünnschicht) / AS4700 | SHP470 (Dickschicht) / AS4700 | 2,2 | 24,7 | 5,8 | 24,7 |

Prüfung der spezifikationsgerechten Beschichtung bei den Beispielen 1 bis 9:

Schichtdicke

Die Schichtdicke wird nach Methode B bestimmt.

Haftung

Die Haftung wird nach Methode C bestimmt.

Die Ergebnisse der Ausprüfung sind in Tabelle 2 zusammengefasst:

Tabelle 2

| Bsp. | Schichtaufbau | | Schichtdicke [μm] | | | | Haftung | |
|---|---|---|---|---|---|---|---|---|
| | Wittenrngs-(Außen) seite | Innenseite | Witterungsseite | | Innenseite | | | |
| | | | Primer (μm) | Topcoat (μm) | Primer (μm) | Topcoat (μm) | Tape Test | Koch-test |
| | Aufprallseite | Zugzone | | | | | | |
| 1 | SHP470 (Dickschicht) / AS4700 | SHP401 / AS4000 | 2,5 | 8,1 | 0,8 | 8,0 | 5B | 4.0 h [5B] |
| 2 | SHP470 (Dickschicht) / AS4700 | PHC 587 | 2,0 | 5,8 | | 6,5 | 5B | 4,0 h [5B] |

(fortgesetzt)

| | Aufprallseite | Zugzone | | | | | | |
|---|---|---|---|---|---|---|---|---|
| 3 | UVHC 3000 | PHC 587 | | 14,3 | | 8,7 | 5B | 4,0 h [5B] |
| 4 | SHP470 (Dickschicht) / AS4700 | SHP470 (Dickschicht) / AS4700 | 2.0 | 6.1 | 2.0 | 6.5 | 5B | 4,0 h [5B] |
| 5 | UVHC 3000 | UVHC 3000 | | 11 | | 11 | 5B | 4,0 h [5B] |
| 6 | PHC 587 | PHC 587 | | 6,0 | | 6,0 | 5B | 4,0 h [5B] |
| 7 | SHP401/ AS4000 | SHP401 / AS4000 | 0.6 | 6,1 | 0,6 | 6,1 | 5B | 4,0 h [5B] |
| 8 | SHP470 (Dickschicht) / AS4700 | SHP470 (Dünnschicht) / AS4700 | 2,4 | 7,0 | 0,5 | 7,0 | 5B | 4,0 h [5B] |
| 9 | SHP470 (Dünnschicht) / AS4700 | SHP470 (Dickschicht) / AS4700 | 0,5 | 7,0 | 2,4 | 7,0 | 5B | 4,0 h [5B] |

Zähigkeit

Die Bewertung der Zähigkeit erfolgte dabei anhand eines Falltests aufbauend auf der Norm DIN EN ISO 6603-1.

Ergebnisse des Falltestes aufbauend auf DIN EN ISO 6603-1 bei den Beispielen 1 bis 7:

Tabelle 3

| Bsp | Schichtaufbau | | Fallturm | |
|---|---|---|---|---|
| | Witterungsseite (Außenseite) | Innenseite | | |
| | Aufprallseite | Zugzone | $V_{krit}$ [m/s] | |
| 1 | SHP470 (Dickschicht) / AS4700 | SHP401 / AS4000 | 5.2 ± 0.1 | |
| 2 | SHP470 (Dickschicht) / AS4700 | PHC 587 | 6.0 ± 0.1 | |
| 3 | UVHC 3000 | PHC 587 | 3.3 ± 0.1 | |
| 4 | SHP470 (Dickschicht) / AS4700 | SHP470 (Dickschicht) / AS4700 | < 2.5 | Sprödbruch bei Minimalgeschwindigkeit |
| 5 | UVHC 3000 | UVHC 3000 | < 2.5 | Sprödbruch bei Minimalgeschwindigkeit |
| 6 | PHC 587 | PHC 587 | 6.2 ± 0.5 | |
| 7 | SHP401 / AS4000 | SHP401 / AS4000 | 8.2 ± 0.1 | |
| 8 | SHP470 (Dickschicht) / AS4700 | SHP470 (Dünnschicht) / AS4700 | 3.7 ± 0.1 | |
| 9 | SHP470 (Dünnschicht) / AS4700 | SHP470 (Dickschicht) / AS4700 | < 2.3 | Sprödbruch bei Minimalgeschwindigkeit |

Musterplatten mit UVHC 3000 oder SHP 470 (Dickschicht)/AS 4700 (entsprechend einer Primer-Dickschicht) in der Zugzone brechen unter den gewählten Bedingungen generell spröde, d.h. die kritische Auftreffgeschwindigkeit

liegt unter 2,5 m/s. Im Gegensatz dazu zeigen die Platten mit SHP 401/AS 4000, mit SHP 470 (Dünnschicht)/AS 4700 (entsprechend einer Primer-Dünnschicht) bzw. mit PHC 587 in der Zugzone auch bei teilweise deutlich höheren Auftreffgeschwindigkeiten ein zähes Bruchverhalten, der Übergang von Zäh- zu Sprödbruch erfolgt dabei-je nach eingesetztem Lacksystem - erst zwischen 3.3 und 8.2 m/s.

## Patentansprüche

**1.** Mehrschichtverbund umfassend in dieser Reihenfolge Schicht A), Schicht B) und Schicht C), wobei
Schicht A) ein Kratzfestlack ist;
Schicht B) ein Thermoplast ist;
Schicht C) ein Kratzfestlack ist;
**dadurch gekennzeichnet, dass** Schicht A) ungleich Schicht C) ist, und wobei ein Mehrschichtverbund mit auf beiden Seiten der Schicht B) angeordneten Schichten A) eine niedrigere kritische Auftreffgeschwindigkeit für den zäh/spröd Übergang bei - 30°C in Anlehnung an DIN EN ISO 6603-1 aufweist als ein Mehrschichtverbund mit auf beiden Seiten der Schicht B) angeordneten Schichten C).

**2.** Mehrschichtverbund nach Anspruch 1, **gekennzeichnet dadurch, dass** der Kratzfestlack in Schicht C) bei beidseitiger Beschichtung des thermoplastischen Substrats eine Auftreßgeschwindigkeit für den zah/spröd Übergang bei -30°C in Anlehnung an DIN EN ISO 6603-1 bei einer Dicke des Mehrschichtverbundes von 5 mm von größer 2,5 m/s hat, wenn Schicht C in der Zugzone liegt.

**3.** Mehrschichtverbund nach Anspruch 1, **dadurch gekennzeichnet, dass** sich die Kratzfestlacke der Schichten A) und C) nur durch die Schichtdicken ihrer Primerschichten und optional ihrer Decklackschichten unterscheiden.

**4.** Mehrschichtverbund nach Anspruch 1, **gekennzeichnet dadurch, dass** der Kratzfestlack in Schicht A)
siliciumorganische Verbindungen der allgemeinen Formel $R'_nSi(OR)_{4-n}$ oder partielle Kondensate derselben;
anorg. feinteilige Verbindung,
UV-Absorber; und
ein Lösemittel auf Alkoholbasis enthält

**5.** Mehrschichtverbund nach Anspruch 1, **gekennzeichnet dadurch, dass** der Kratzfestlack in Schicht A)
UV-härtende Beschichtungssysteme auf Acrylat-, Urethanacrylat oder Acrylsilanbasis;
optional einen oder mehrere Füllstoffe;
UV-Absorber;
Photoinitiator; und
ein Lösemittel auf Alkoholbasis enthält.

**6.** Mehrschichtverbund nach Anspruch 1, **gekennzeichnet dadurch, dass** der Kratzfestlack in Schicht C)
siliciumorganische Verbindungen der allgemeinen Formel $R'_nSi(OR)_{4-n}$ oder partielle Kondensate derselben;
anorganische Nanopartikel;
Lösemittel auf Alkohalbasis;
gegebenenfalls UV-Absorber, und
einen organischen Haftvermittler auf Acrylatbasis enthält.

**7.** Mchrschichtverbund nach Anspruch 1, **gekennzeichnet dadurch, dass** der Mehrschichtverbund zwischen Schicht A) und Schicht B) oder zwischen Schicht B) und Schicht C) oder zwischen allen drei Schichten Primerschichten aufweist

**8.** Mehrschichtverbund nach Anspruch 7, **gekennzeichnet dadurch, dass** der Primer zwischen Schicht A) und Schicht B) Polymethylmethacrylat, 1-Methoxy-2-propanol, Diacetonalkohol und einen UV-Absorber enthält.

**9.** Mehrschichtverbund nach Anspruch 1, **gekennzeichnet dadurch, dass** der Thermoplast in Schicht B) ausgewählt ist aus der Gruppe bestehend aus Polycarbonat, Polyestercarbonat, Polyester, Polyphenylenether, und Pfropfcopolymer oder cinem Blend davon.

**10.** Mehrschichtverbund nach Anspruch 1, **gekennzeichnet dadurch, dass** Schicht B) spritzgegossen ist.

**11.** Verehren zum Herstellen eines Mehrschichtverbundes gemäβ Anspruch 1 , umfassend die Schritte i) Positionieren der Schicht B), so dass eine Kante der Schicht B) tiefer liegt als die höherltegende Kante; ii) Anfluten der Schicht B) an der Oberseite der höherliegenden Kante mit flüssigern Kratzfestlack unter Bildung einer Schicht A); iii) Anfluten der Schicht B) an der Unterseite der höherliegenden Kante mit flüssigem Kratzfestlack unter Bildung einer Schicht C); und iv) Trocknung der Lacke.

**12.** Verfahren nach Anspruch 11, **dadurch gekennzeichnet, dass** Schritte ii) und iii) im wesentlichen zeitgleich erfolgen.

**13.** Verfahren nach Anspruch 12, **dadurch gekennzeichnet, dass** Schritte ii) und iii) im Abstand von 1 bis 30 min erfolgen.

**14.** Verwendung das Mehrschichtverbundes nach Anspruch 1 als Verscheibung, wobei die Verscheibung vorwiegend gegen Durchstoß und Bowitterung auf der Seite der Schicht A) des Mehrschichtverbundes schützen muss.

**15.** Verwendung des Mehrschichtverbundes nach Anspruch 1 als Architekturverscheibung, Automobilverscheibung, Karosserrieabdeckteil oder Windshield.

**16.** Mehrschichtverbund nach Anspruch 4; wobei die anorg- feinteilige Verbindung $SiO_2$ ist.

**17.** Mehrschichtverbund nach Anspruch 6, wobei der UV-Absorber ein silylierter UV-Absorber ist.

## Claims

**1.** Multi-layer composite comprising in this order layer A), layer B) and layer C), where
layer A) is a scratch-resistant coating;
layer B) is a thermoplastic;
layer C) is a scratch-resistant coating;
**characterized in that** layer A) is not the same as layer C), and where a multi-layer composite having layers A) disposed on both sides of the layer B) has a lower critical impact speed for the tough/brittle transition at -30°C according to DIN EN ISO 6603-1 than a multi-layer composite having layers C) disposed on both sides of the layer B).

**2.** Multi-layer composite according to Claim 1, **characterized in that** the scratch-resistant coating in layer C) has an impact speed for the tough/brittle transition at -30°C according to DIN EN ISO 6603-1 of greater than 2.5 m/s when the thermoplastic substrate is coated on both sides, when the multi-layer composite has a thickness of 5 mm and when layer C is situated in the tension zone.

**3.** Multi-layer composite according to Claim 1, **characterized in that** the scratch-resistant coatings of the layers A) and C) differ only in the layer thicknesses of their primer layers and optionally of their topcoat layers.

**4.** Multi-layer composite according to Claim 1, **characterized in that** the scratch-resistant coating in layer A) comprises organosilicon compounds of the general formula $R'nSi(OR)_{4-n}$ or partial condensates thereof;
inorganic finely divided compound;
UV absorber(s); and
an alcohol-based solvent.

**5.** Multi-layer composite according to Claim 1, **characterized in that** the scratch-resistant coating in layer A) comprises UV-curing coating systems based on acrylate, urethane acrylate or acrylosilane; optionally one or more fillers;
UV absorber (s);
photoinitiator; and
an alcohol-based solvant.

**6.** Multi-layer composite according to Claim 7, **characterized in that** the scratch-resistant coating in layer C) comprises organosilicon compounds of the general formula $R'_nSi(OR)_{4-n}$ or partial condensates thereof;
inorganic nanoparticles;
alcohol-based solvent(s);
optionally UV absorber(s); and
an acrylate-based organic adhesion promoter.

7. Multi-layer composite according to Claim 1, **characterized in that** the multi-layer composite has primer layers between layer A) and layer B) or between layer B) and layer C) or between all three layers.

8. Multi-layer composite according to Claim 7, **characterized in that** the primer between layer A) and layer B) comprises polymethyl methacrylate, 1-methoxy-2-propanol, diacetone alcohol and a UV absorber.

9. Multi-layer composite according to Claim 1, **characterized in that** the thermoplastic in layer B) is selected from the group consisting of polycarbonate, polyester carbonate, polyester, polyphenylene ether, and graft copolymer or a blend thereof.

10. Multi-layer composite according to Claim 1, **characterized in that** layer B) is infection-moulded.

11. Process for producing a multi-layer composite according to Claim 1, comprising the steps of

    i) positioning the layer B) so that one edge of the layer B) is lower than the higher edge,
    ii) flow coating the layer B) on the upper side of the higher edge with liquid scratch-resistant coating material, to form a layer A); iii) flow coating the layer B) on the lower side of the higher edge with liquid scratch-resistant coasting material, to form a layer C); and iv) drying the coatings.

12. Process according to Claim 11, **characterized in that** steps ii) and iii) take place substantially at the same time.

13. Process according to Claim 12, **characterized in that** steps ii) and iii) take place at an interval of 1 to 30 minutes.

14. Use of the multi-layer composite according to Claim 1 as glazing, the glazing being required to protect primarily against penetration and weathering on the side of the layer A) of the multi-layer composite.

15. Use of the multi-layer composite according to Claim 1 as architectural glazing, automotive glazing, body trim component or windshield.

16. Multi-layer composite according to Claim 4, where the inorganic finely divided compound is $SiO_2$.

17. Multi-layer Composite according to Claim 6, where the UV absorber is a silylated UV absorber.

## Revendications

1. Composite multicouche comprenant dans cet ordre une couche A), une couche B) et une couche C),
   la couche A) étant une laque résistante aux éraflures;
   la couche B) étant un thermoplastique ;
   la couche C) étant une laque résistante aux éraflures ;
   **caractérisé en ce que** la couche A) est différente de la couche C), un composite multicouche avec des couches A) agencées des deux côtés de la couche B) présentant une vitesse d'impact critique pour la transition ductile/fragile à -30 °C selon DIN EN ISO 6603-1 inférieure à un composite multicouche avec des couches C) agencées des deux côtés de la couche B).

2. Composite multicouche selon la revendication 1, **caractérisé en ce que** la laque résistante aux éraflures dans la couche C) présente lors d'un revêtement des deux côtés du substrat thermoplastique une vitesse d'impact pour la transition ductile/fragile à -30 °C selon DIN EN ISO 6603-1 à une épaisseur du composite multicouche de 5 mm supérieure à 2,5 m/s lorsque la couche C se trouve dans la zone de traction.

3. Composite multicouche selon la revendication 1, **caractérisé en ce que** les laques résistantes aux éraflures des couches A) et C) ne différent que par les épaisseurs de couche de leurs couches d'amorce et éventuellement de leurs couches de laque supérieures.

4. Composite multicouche selon à revendication 1, **caractérisé en ce que** la laque résistante aux éraflure dans la couche A) contient
   des composés organiques de silicium de formule générale $R'_nSi(OR)_{4-n}$ ou leurs condensats partiels ;
   un composé inorganique finement divise ;

un absorbeur UV ; et
un solvant à base d'alcool.

5. Composite multicouche selon la revendication 1, **caractérisé en ce que** la laque résistante aux éraflure dans la couche A) contient
des systèmes de revêtement durcissant par UV-à base d'acrylate, d'acrylate d'uréthane ou d'acrylosilane ; éventuellement une ou plusieurs charges ;
un absorbeur UV ;
un photoinitiateur ; et
un solvant à base d'alcool.

6. Composite multicouche selon la revendication 1, **caractérisé en ce que** la laque résistante aux éraflures dans la couche C) contient
des composés organique de silicium de formule générale $R'_nSi(OR)_{4-n}$ ou leurs condensats partiels ;
des nanoparticules inorganiques ;
un solvant à base d'alcool;
éventuellement un absorbeur UV ; et
un promoteur d'adhésion organique à base d'acrylate.

7. Composite multicouche selon la revendication 1, **caractérisé en ce que** le composite multicouche comprend des couches d'amorce entre la couche A) et la couche B), ou entre la couche B) et la couche C), ou entre les trois couches.

8. Composite multicouche selon la revendication 7, **caractérisé en ce que** l'amorce entre la couche A) et la couche B) contient du polyméthacrylate de méthyle, du 1-méthoxy-2-propanol, de l'alcool diacétonique et un absorbeur UV.

9. Composite multicouche selon la revendication 1, **caractérisé en ce que** le thermoplastique dans la couche B) est choisi dans le groupe constitué par le polycarbonate, le carbonate de polyester, le polyester, l'éther de polyphénylène et un copolymère greffé ou un de leurs mélanges.

10. Composite multicouche selon la revendication 1, **caractérisé en ce que** la couche B) est moulée par injection.

11. Procédé de fabrication d'un composite multicouche selon la revendication 1, comprenant les étapes i) le positionnement de la couche B) de manière à ce qu'un bord de la couche B) soit placé plus profondément que le bord plus élevé ; ii) le recouvrement de la couche B) du côté supérieur du bord le plus élevé avec une laque résistante aux éraflures liquide pour former une couches) ; iii) le recouvrement de la couche B) sur le côté inférieur du bord le plus élevé avec une laque résistante aux éraflures liquide pour former une couche C) ; et iv) le séchage des laques.

12. Procédé selon la revendication 11, **caractérisé en ce que** les étapes ii) et iii) ont lieu essentiellement simultanément.

13. Procédé selon la revendication 12, **caractérisé en ce que** les étapes ii) et iii) ont lieu à un intervalle de 1 à 30 minutes.

14. Utilisation du composite multicouche selon la revendication 1 en tant que vitre, la vitre devant principalement être protégée contre les perforations et les intempéries du côté de la couche A) du composite multicouche.

15. Utilisation du composite multicouche selon la revendication 1 en tant que vitre architecturale, vitre automobile, pièce de revêtement de carrosserie ou pare-brise.

16. Composite multicouche selon la revendication 4, dans lequel le composite anorganique finement divisé est $siO_2$.

17. Composite multicouche selon la revendication 6, dans lequel l'absorbeur UV est un absorbeur UV silylé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4278804 A
- US 4373061 A
- US 4410594 A
- US 5041313 A
- EP 1087001 A
- US 5391795 A
- US 5679820 A
- EP 2008008835 W
- US 3707397 A
- DE 69717959
- US 5990188 A
- US 5817715 A
- US 5712325 A
- DE 3044450 A1
- DE 102004014023 A1


### In der Beschreibung aufgeführte Nicht-Patentliteratur


- The Next Generation in Weatherable Hardcoats for Polycarbonate. Paint & Coating Industrie. George Medford / General Electric Silicones, Juli 2001, 64-76
- **Friedrich Johannnaber ; Walter Michaeli.** Handbuch Spritzgießen. Hanser, 2001
- **Menges ; Michaeli ; Mohren.** Anleitung zum Bau von Spritzgießwerkzeugen. Hanser, 1999